# EUROPEAN PATENT SPECIFICATION

(11) **EP 1 500 330 B1**
(45) Date of publication and mention of the grant of the patent: **15.04.2009**
(21) Application number: 04015004.7
(22) Date of filing: 25.06.2004
(51) Int. Cl.: A01K 89/015

(54) **Dual-bearing reel**
Doppelt gelagerte Angelrolle
Moulinet de pêche à bobine rotative supportée par deux roulements

(30) Priority: 26.06.2003 JP 2003183259
(43) Date of publication of application: 26.01.2005
(73) Proprietor: SHIMANO INC., Osaka 590-8577 (JP)
(72) Inventor: Myojo, Seiji, Sakai Osaka 590-8577 (JP); Nago, Akira, Sakai Osaka 590-8577 (JP)
(74) Representative: Hofmann, Harald

(56) References cited:
- EP-A- 1 304 033
- PATENT ABSTRACTS OF JAPAN vol. 2002, no. 08, 5 August 2002 (2002-08-05) & JP 2002 095392 A (DAIWA SEIKO INC), 2 April 2002 (2002-04-02)
- PATENT ABSTRACTS OF JAPAN vol. 2000, no. 07, 29 September 2000 (2000-09-29) & JP 2000 093054 A (DAIWA SEIKO INC), 4 April 2000 (2000-04-04)
- PATENT ABSTRACTS OF JAPAN vol. 2003, no. 03, 5 May 2003 (2003-05-05) & JP 2002 335829 A (DAIWA SEIKO INC), 26 November 2002 (2002-11-26)

## Description

### BACKGROUND OF THE INVENTION

### 1. Field of the Invention

This invention generally relates to fishing reels. More specifically, the present invention relates to a dual bearing reel that is mounted on a fishing rod and winds fishing line around an axis that is perpendicular to the fishing rod.

### 2. Background Information

A dual bearing reel generally includes a reel body, which freely allows reeling-out and winding of the fishing line, and a handle for performing a winding operation of the fishing line.

The reel body accommodates a spool for winding the fishing line, a spool driving mechanism for rotating the spool, a drag mechanism for restricting the reeling out of the fishing line, and a level winding mechanism for winding the fishing line uniformly on the spool while the fishing line is wound. The spool driving mechanism includes a clutch mechanism that switches the spool between a freely rotatable state and a line winding state. The spool driving mechanism is formed such that a handle can be coupled thereto. In addition, the drag mechanism that brakes the rotation of the spool in the line reel-out direction is provided along the spool driving mechanism. Furthermore, a brake mechanism for preventing spool backlash during casting is provided. The handle is disposed on a position that projects outward from the reel body, in order to allow easy operation of the handle.

The reel body includes a main frame and a pair of cover members. The main frame includes a pair of side plates and connecting members that connect both side plates. The pair of cover members covers the exteriors of both side plates. In conventional dual bearing reels, the spool is provided between both side plates, and the handle shaft on which the handle is mounted is mounted on one side plate and one cover member. In addition, the spool driving mechanism is provided between the cover member and the side plate on the side in which the handle is mounted. The spool driving mechanism (which includes the clutch mechanism) and the drag mechanism are positioned and supported by the cover member and the side plate on the side in which the handle is mounted. In addition, the brake mechanism is mounted between the side plate and the cover member that are on the side opposite the side in which the handle is mounted. Furthermore, the level winding mechanism is provided between both side plates. The brake mechanism and the level winding mechanism are also positioned and supported on the side plates and cover plates. Thus, the dual bearing reel is a structure that functions as a whole.

In the aforementioned conventional dual bearing reel, a pair of cover members is mounted on the outer sides of the main frame. These cover members serve to establish the outer appearance of the dual bearing reel, but the cover members also position and support various mechanisms because they are mounted on the main frame. In other words, both the main frame and the cover members cooperatively position and support the spool, the spool driving mechanism, the level winding mechanism, and the brake mechanism. Thus, the dual bearing reel is a structure that functions as a whole.

Due to such structure of the dual bearing reel, the design of the cover members needs to take into consideration the following requirements. First of all, portions of the cover members that support the spool have to be shaped so as to have enough strength to support the spool. Also, the position of the spool-support portion has to be determined based on the position of the spool. Furthermore, a portion that supports the handle has to be shaped so as to have sufficient strength to hold a bearing. Furthermore, since the cover members are mounted on the main frame, their engagement portions need to be formed with a high precision.

On the other hand, since the sub frame also functions as the surface of the dual bearing reel, the sub frame needs to have not only the functionality, but also a good ornamental design. Otherwise, the commercial value of the dual bearing reel will be compromised.

Therefore, there has not been much flexibility in the design of cover member due to various functional constraints of the dual bearing reel. As a result, it has been very difficult if not impossible to establish common parts for use in different models, while providing the ornamental designs of users' preference and maintaining the functions of the dual bearing reel at the same time. Accordingly, the manufacturing costs tended to be higher. JP 2002095392 and JP 2000093054, describe fishing reels according to the preamble of the first claim.

In view of the above, there exists a need for a dual bearing reel which overcomes the above mentioned problems in the prior art. This invention addresses this need in the prior art as well as other needs, which will become apparent to those skilled in the art from this disclosure.

### SUMMARY OF THE INVENTION

An object of the present invention is to provide a dual bearing reel that has flexibility in its ornamental design and that can use common parts which can be used in other models, while securing the indispensable functions of the dual bearing reel.

To achieve the aforementioned objects, the inventor of the present invention focused on the fact that it is effective to separate a member that positions and supports functional members such as the spool and the spool driving mechanism, which are indispensable in the dual bearing reel, from a member that functions as a surface, instead of using as an outer plate of the dual bearing reel the member that supports and positions the functional members.

The dual bearing reel in accordance with the present invention includes a basic unit and a spool and an outer plate portion. The basic unit includes a spool for winding or reeling out a fishing line by being rotated in normal or reverse direction, a spool driving mechanism for driving the spool, and an attachment frame to which the spool and the spool driving mechanism are attached such that the spool and the spool driving mechanism can function in cooperation with each other. The outer plate portion is attached to the attachment frame of the basic unit.

In this structure, the spool and the spool driving mechanism are attached to the attachment frame such that they function in cooperation with each other. In other words, the spool and the spool driving mechanism are installed in the attachment frame.

By installing the spool and the spool driving mechanism in the attachment frame, the attachment frame, the spool, and the spool driving mechanism can form a unit that by itself has all the indispensable functions of the dual bearing reel. By attaching the outer plate member to the attachment frame, the surface of the dual bearing reel can be formed.

In other words, the dual bearing reel of the present invention omits the sub frame, while the sub frame has been used in conventional dual bearing reels as an outer plate to form the surface as well as to support the spool and the drag mechanism such that they function together. Instead, the dual bearing reel of the present invention, according to claim 1, has the attachment frame which supports and positions the functional members such as the spool such that they function in cooperation with each other, with the surface being formed solely by the outer plate members. Accordingly, the outer plate member does not need to perform functions such as supporting the spool and positioning the spool driving mechanism. Therefore, there is no restriction on the design of the outer plate members due to functional requirements as has been the case with conventional dual bearing reels. The outer plate members can be designed freely as ornamental parts.

Preferably, the basic unit of the dual bearing reel further includes a braking mechanism for applying a brake to the rotation of the spool, and a level winding mechanism for winding the fishing line uniformly on the spool. The braking mechanism and the level winding mechanism can be attached to the attachment frame such that the braking mechanism and the level winding mechanism function in cooperation with each other.

In this manner, it is possible to achieve a favorable casting with the braking mechanism by preventing a backlash at the time of casting. The level winding mechanism winds the fishing line favorably by arranging the fishing line uniformly on the spool. Furthermore, since these members such as the braking member are installed in the attachment frame, the outer plate member does not need to perform functions such as supporting the spool and positioning the spool driving mechanism. Accordingly, there is no restriction on the design of the outer plate member due to functional requirements as has been the case with conventional dual bearing reels. The outer plate members can be designed freely as ornamental parts.

The surface of the dual bearing reel is solely formed by the outer plate member, and there is no requirement for precision and solidness of attachment as in the case of conventional dual bearing reels.

Particularly, by making the outer plate member from ABS resin, it is possible to apply coating and plating easily. Accordingly, it is possible to manufacture outer plate members in various shapes at a low cost.

These and other objects, features, aspects and advantages of the present invention will become apparent to those skilled in the art from the following detailed description, which, taken in conjunction with the annexed drawings, discloses a preferred embodiment of the present invention.

### BRIEF DESCRIPTION OF THE DRAWINGS

Referring now to the attached drawings which form a part of this original disclosure:
Figure 1 is an oblique view of a dual bearing reel according to the fourth embodiment of the present invention;
Figure 2 is an exploded oblique view showing the basic unit and the cover portions of the dual bearing reel of Figure 12 according to the fourth embodiment of the present invention; and
Figure 3 is an exploded oblique view showing the component parts of the dual bearing reel of Figure 12 according to the fourth embodiment of the present invention.

### DETAILED DESCRIPTION OF THE PREFERRED EMBODIMENTS

Selected embodiments of the present invention will now be explained with reference to the drawings. It will be apparent to those skilled in the art from this disclosure that the following description of the embodiments of the present invention is provided for illustration only, and not for the purpose of limiting the invention as defined by the appended claims.

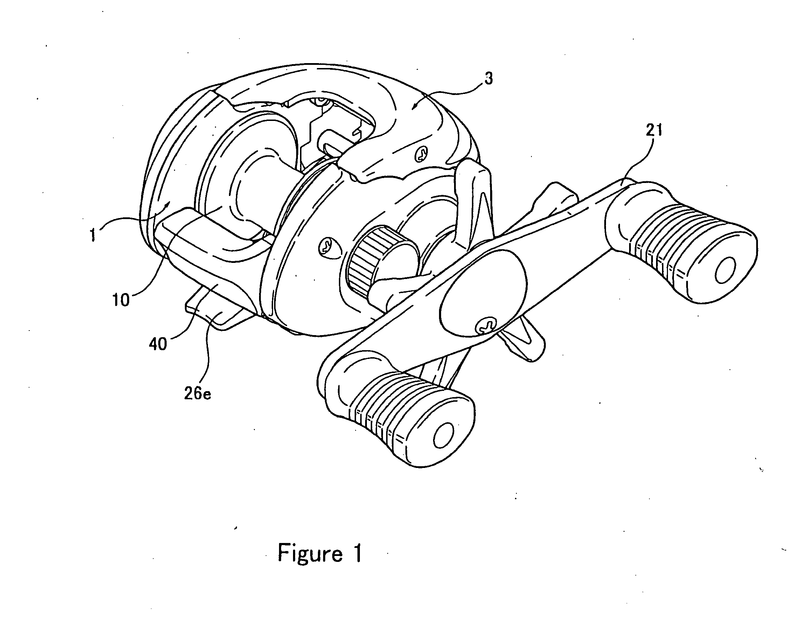

As shown in Figure 1, a dual bearing reel in accordance with the present invention is mounted to a fishing rod and winds fishing line around a shaft that is perpendicular to the fishing rod, and includes a basic unit 1 and a decorative cover portion 3 that can be mounted to the basic unit 1.

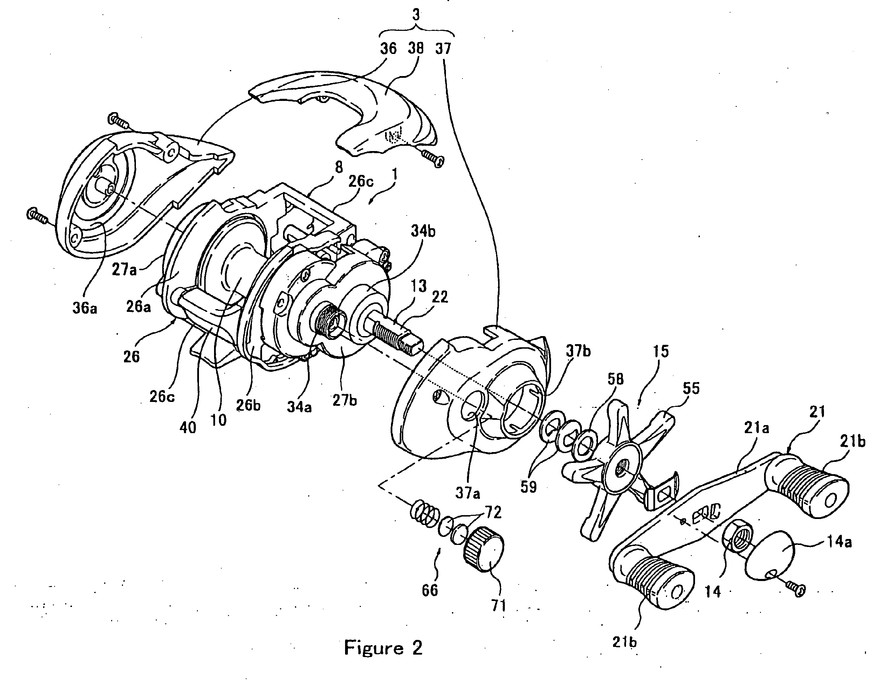

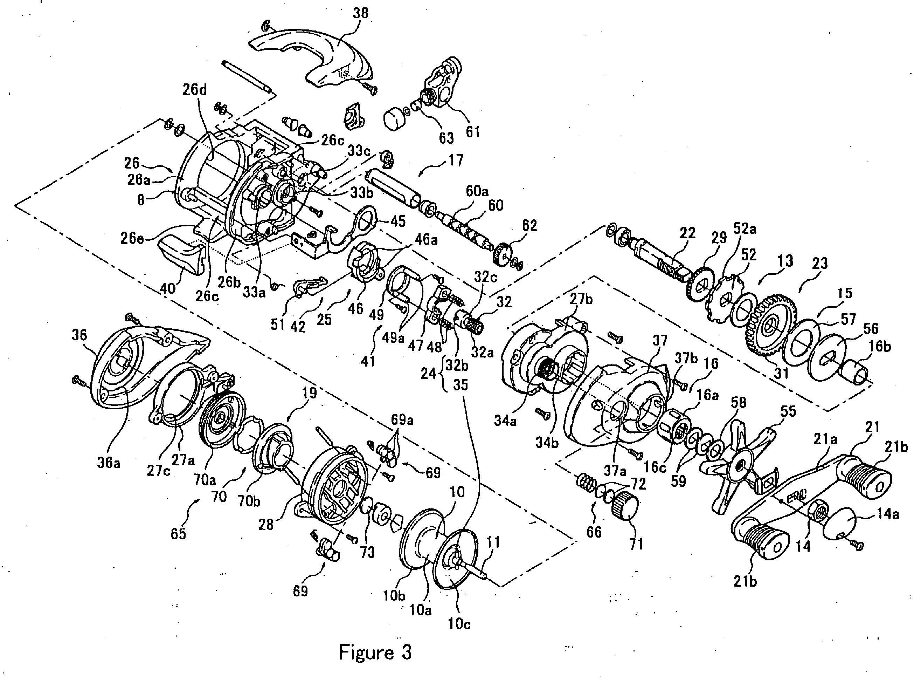

As shown in Figures 2 and 3, the basic unit 1 includes a reel body 8 that serves as an installation frame, a spool 10 around which fishing line is wound, a spool driving mechanism 13 for rotatively driving the spool 10, a drag mechanism 15, a level winding mechanism 17, and a brake mechanism 19.

The spool 10, the spool driving mechanism 13, the level winding mechanism 17, and the brake mechanism 19 are installed in the reel body 8 such that they function in cooperation with each other. The reel body 8 includes a main frame 26, third and fourth side plates 27a, 27b, and a brake case 28. The main frame 26 is mounted to the fishing rod, and includes first and second side plates 26a, 26b that are spaced apart from each other and have the spool 10 mounted therebetween. The third and fourth side plates 27a, 27b are each detachably installed on the outer sides of the first and second side plates 26a, 26b in the spool shaft direction. The brake case 28 is detachably mounted to the first side plate 26a. The spool 10, the spool driving mechanism 13, the drag mechanism 15, the level winding mechanism 17, and the brake mechanism 19 are installed in the reel body 8 such that they function in cooperation with each other.

The spool 10 is disposed between the first side plate 26a and the second side plate 26b, and the level winding mechanism 17 is disposed in front of the spool 10. A space that accommodates the brake mechanism 19 is formed in between the first side plate 26a and the third side plate 27a, and the brake mechanism 19 is positioned and supported in this space. A space that accommodates the spool driving mechanism 13 and the drag mechanism 15 is formed in between the second side plate 26a and the fourth side plate 27b, and the spool driving mechanism 13 and the drag mechanism 15 are positioned and supported in this space.

A circular opening 26d is formed in the first side plate 26a. The circular opening 26d is sized so that the spool 10 can pass therethrough. The brake mechanism 19 is installed in the opening 26d. In addition, the brake case 28 rotatively supports one end of a spool shaft 11, and is detachably mounted in the opening 26d by a bayonet structure. The brake case 28 is fixed to the third side plate 27a with screws. Thus, the third side plate 27a is detachably mounted to the first side plate 26a via the brake case 28. In addition, a through hole (not shown in the figures) for mounting the level winding mechanism 17 is formed in the first side plate 26a.

A first boss 33a and a first boss 33b are formed in the second side plate 26b. The spool shaft 11 fixed in the center of the spool 10 passes through the first boss 33a, and the first boss 33b supports a handle shaft 22 (noted below) of the spool driving mechanism 13. In addition, a through hole 33c for mounting the level winding mechanism 17 is formed in the second side plate 26b.

A long rod mounting leg 26e for mounting the reel to the fishing rod is formed on the lower side of a connecting portion 26c, and extends from front to back.

The third side plate 27a has a planar shape, and is provided in order to rotatively mount the brake mechanism 19. The third side plate 27a includes a circular opening 27c that is capable of exposing an operation dial 70a (noted below) of the brake mechanism 19. Because the third side plate 27a is not necessary to determine the decorative design of the reel, the third side plate 27a needs to be sized only to be just large enough to fulfill its functions.

Rather than having smoothly curved side surfaces, the fourth side plate 27b has stepped planar surfaces that are shaped to easily maintain the strength and precision of the fourth side plate 27b. This is because the fourth side plate 27b is also not needed to determine the decorative design of the reel. The fourth side plate 27b is fixedly coupled to the second side plate 26b with screws. The fourth side plate 27b has the same function as a conventional cover member, and includes a first boss 34a through which the handle shaft 22 passes and a second boss 34b in which one end of the spool shaft 11 is disposed.

Cover portion 3 is, for example, made from a synthetic resin that is easily plated with a comparatively hard resin such as an acrylic resin or the like, and is provided primarily for decorative use. Thus, the cover portion 3 has almost no function as a means of supporting or positioning various components mounted inside the reel. The basic unit 1 is constructed such that it can function as a dual bearing reel even if the cover portion 3 is not mounted to the basic unit 1. The cover portion 3 includes a first cover member 36, a second cover member 37, and a front cover member 38. The first cover member 36 is fixedly coupled to the first side plate 26a with screws such that the first cover member 36 covers the exterior of the third side plate 27a. The second cover member 37 is fixedly coupled to the second side plate 26b such that the second cover member 37 covers the exterior of the fourth side plate 27b. The front cover member 38 is fixedly coupled to both side plates 26a, 26b such that the front cover member 38 covers the upper front of the main frame 26. Note that the first cover member 36 and the second cover member 37 may be screwed to the third and fourth side plates 27a, 27b instead of the first and second side plates 26a, 26b.

In order to determine the decorative design of the reel, the first cover member 36 is formed in a shape in which the front portion thereof is slightly pointed and the rear portion thereof is rounded. In addition, the first cover member 36 as a whole is smoothly curved in a convex shape, with the curve extending outward in the axial direction about the axial center of the spool shaft 11. A circular arc shaped opening 36a is formed in the first cover member 36, and serves to expose a brake operation portion of the brake mechanism 19 to the exterior of the reel. Like with the first cover member 36, in order to determine the decorative design of the reel, the second cover member 37 is formed in a shape in which the tip thereof is slightly pointed. The second cover member 37 includes a first through hole 37a and a second through hole 37b. The first boss 34a of the fourth side plate 27b passes through the first through hole 37a, and both the second boss 34b and the handle shaft 22 mounted to the second boss 34b pass through the second through hole 37b. In order to improve the decorative design, the portion which forms the second through hole 37b is formed to project outward in a taper shape so as to cover the second boss 34b.

As shown in Figure 3, the spool 10 includes a cylindrical bobbin trunk 10a, and a pair of large diameter flange portions 10b, 10c that are formed integrally with the bobbin trunk 10a on both sides thereof. The spool shaft 11 passes through the center of the spool 10 and is non-rotatably mounted thereto. The spool shaft 11 is rotatively mounted to the reel body 8.

The spool driving mechanism 13 includes a rotation transmission mechanism 23, a clutch mechanism 24, and a clutch switching mechanism 25. The rotation transmission mechanism 23 includes the handle shaft 22 on one end of which a handle assembly 21 is mounted, and transmits the rotation of the handle assembly 21 to the spool 10. The clutch mechanism 24 is arranged along the transmission path of the rotation transmission mechanism 23, and switches the spool 10 between a freely rotatable state and a line winding state. The clutch switching mechanism 25 serves to turn the clutch mechanism 24 on or off.

The handle assembly 21 includes a handle arm 21 a that is non-rotatably mounted on a tip of the handle shaft 22, and handle grips 21 b that are rotatively mounted on both ends of the handle arm 21 a. The handle arm 21 a is fixedly coupled to the tip of the handle shaft 22 by a nut 14. The nut 14 is prevented from rotating by a rotation prevention member 14a that is screwed onto the handle arm 21 a.

The handle shaft 22 is rotatively mounted on the first boss 33b of the second side plate 26b, and is prohibited from rotating in the direction in which fishing line is reeled out by a roller-type one-way clutch 16 that is mounted to the second boss 34b of the fourth side plate 27b. The one-way clutch 16 includes an outer ring 16a, an inner ring 16b, and rollers 16c. The outer ring 16a is non-rotatably mounted to the second boss 34b. The inner ring 16b non-rotatably mounted to the handle shaft 22 via the drag mechanism 15 and faces the outer ring 16a. The rollers 16c are disposed between both rings 16a, 16b such that they can come into contact with both rings 16a, 16b.

The rotation transmission mechanism 23 includes a main gear 31, a pinion gear 32, and a drive gear 29. The main gear 31 is rotatively disposed on the handle shaft 22. The pinion gear 32 meshes with the main gear 31. The drive gear 29 is non-rotatably mounted to the handle shaft 22. Rotation from the handle shaft 22 to the main gear 31 is transmitted via the drag mechanism 15. The pinion gear 32 is disposed such that it is both rotatable and axially movable relative to the spool shaft 11. The pinion gear 32 is disposed on the inner side of the first boss 33a of the second side plate 26b. The pinion gear 32 includes gear teeth 32a, an engagement recess 32b, and a neck portion 32c. The gear teeth 32a are formed on one end of the pinion gear 32, and mesh with the main gear 31. The engagement recesses 32b are formed on the other end of the pinion gear 32 and form the clutch mechanism 24. The neck portion 32c is formed in between the gear teeth 32a and the engagement recesses 32b, has a small diameter, and engages with the clutch switching mechanism 25. A drive gear 29 is provided to transmit the rotation of the handle assembly 21 to the level winding mechanism 17.

The clutch mechanism 24 includes a clutch pin 35 that is mounted on the spool shaft 11, and the engagement recesses 32b that are formed in the pinion gear 32. The clutch pin 35 is mounted to the spool shaft 11 and passes through the spool shaft 11 in the radial direction. Four engagement recesses 32b are formed in the pinion gear 32, and extend inward from one end surface of the pinion gear 32 toward the other end thereof. When the clutch pin 35 engages with the engagement recesses 32b, the clutch mechanism 24 will be in a clutch-on state and the spool 10 will be capable of winding in fishing line. When the pinion gear 32 moves outward in the axial direction away from the spool 10 and is disengaged therefrom, the clutch mechanism 24 will be in the clutch-off state and the spool 10 will be capable of free rotation.

The clutch switching mechanism 25 includes a clutch operation member 40, a clutch movement mechanism 41, and a clutch return mechanism 42. The clutch operation member 40 serves to turn the clutch mechanism 24 on and off. The clutch movement mechanism 41 moves the clutch mechanism 24 to the on and off positions by operation of the clutch operation member 40. The clutch return mechanism 42 returns the clutch mechanism 24 to the clutch-on state from the clutch-off state when the handle assembly 21 is rotated in the line winding direction.

The clutch operation member 40 is disposed on the rear portion of the reel body 8 on the first and second side plates 26a, 26b, and moves both toward and away from the fishing rod mount.

The clutch movement mechanism 41 includes a clutch plate 45, a clutch cam 46, a clutch yoke 47, and two coil springs 48. The clutch plate 45 is mounted to the clutch operation member 40, and is pivotably mounted to the second side plate 26b. The clutch cam 46 engages with the clutch plate 45 and rotates. The clutch yoke 47 is pushed outward in the axial direction of the spool by the clutch cam 46. The two coil springs 48 bias the clutch yoke 47 inward in the axial direction. The clutch plate 45 is pivotably mounted to the first boss 33b of the second side plate 26b with the rotation of the handle shaft 22. The clutch cam 46 is rotatively mounted to the first boss 33a with the rotation of the spool shaft 11. The clutch cam 46 rotates when the clutch plate 45 pivots, and the clutch cam 46 is linked to the clutch plate 45 such that the clutch plate 45 pivots when the clutch cam 46 rotates. A pair of cam projections 46a is formed in the clutch cam 46, and push the clutch yoke 47 axially outward, i.e., the clutch-off direction, by rotational movement. The clutch yoke 47 is a member that engages with the neck portion 32c on the pinion gear 32, and is mounted such that it is moveable in the spool shaft 11 direction by a guide member 49 that includes two guide shafts 49a. The guide member 49 is screwed to the periphery of the first boss 33a, and prevents the clutch cam 46 from falling off of the first boss 33a. The tips of the guide shafts 49a come into contact with the inner surface of the fourth side plate 27b. The coil springs 48 are disposed in the compressed state around the outer peripheries of the guide shafts 49a, and bias the clutch yoke 47 inward in the axial direction, i.e., in the clutch-on direction. Here, when the clutch plate 45 pivots in the counterclockwise direction in Figure 3, pushing the clutch operation member 40 downward, the clutch cam 46 will be rotated in the same direction, and the clutch yoke 47 will be pushed outward in the axial direction to move the pinion gear 32 into the clutch-off direction. This places the clutch mechanism 24 in the clutch-off state, and the spool 10 will be capable of free rotation. When the clutch operation member 40 is pushed upward, the pushing pressure applied by the clutch cam 46 will be released, and the clutch yoke 47 will be biased inward in the axial direction by the coil springs 48, and the clutch yoke 47 will be moved into the clutch-on direction to place the clutch mechanism 24 in the clutch-on state. This places the spool 10 into the line winding state, and when the handle assembly 21 rotates in the line winding direction, the fishing line is wound around the spool 10 and the drag mechanism 15 can be operated.

The clutch return mechanism 42 includes a return pawl 51 that is pivotably mounted to the clutch cam 46, and a ratchet 52 that is non-rotatably mounted to the handle shaft 22. When the clutch cam 46 rotates to the clutch off position, the tip of the return pawl 51 is disposed near the outer periphery of the ratchet 52. A plurality of teeth 52a that are capable of pushing the return pawl 51 are formed on the outer periphery of the ratchet 52, and the return pawl 51 is pushed by the teeth 52a when the handle shaft 22 rotates in the line winding direction. Thus, the clutch cam 46 rotates to the clutch-on position and the clutch mechanism 24 returns to the clutch-on state.

The drag mechanism 15 brakes the rotation of the spool 10 in the line-releasing direction when the clutch mechanism 24 is in the clutch-on state. The drag mechanism 15 includes a star drag 55 for operating the drag, and two drag disks 56, 57 that are pushed by the star drag 55. The star drag 55 is disposed in the vicinity of the handle arm 21a, and is screwed onto the handle shaft 22. The drag disk 56 is non-rotatably mounted to the handle shaft 22, and is pushed by the star drag 55 via a washer 58, two plate springs 59, and the inner ring 16b of the one-way clutch 16. The inner ring 16b non-rotatably engages with the drag disk 57, and the inner ring 16b is non-rotatable on the handle shaft 22. The drag disk 57 is disposed adjacent to the main gear 31. The main gear 31 is mounted on the handle shaft 22 so that the main gear 31 is not movable in the pushing direction (toward the left in Figure 3). Because of this, the drag strength of the drag mechanism 15 will increase when the star drag 55 rotates in the clockwise direction.

The level winding mechanism 17 includes a spiral shaft 60 and a fishing line guide 61. The spiral shaft 60 is rotatively supported on both ends of the spiral shaft 60 by the first and second side plates 26a, 26b, and is disposed parallel to the spool shaft 11. The fishing line guide 61 engages with the spiral shaft 60, and reciprocates back and forth along the spool shaft 11. A driven gear 62 that meshes with the drive gear 29 is mounted on one end of the spiral shaft 60, and the rotation of the handle shaft 22 in the line winding direction is transmitted to the spiral shaft 60. Intersecting spiral grooves 60a are formed on the outer peripheral surface of the spiral shaft 60, and an engagement member 63 that engages with the spiral grooves 60a is rotatively mounted on the fishing line guide 61.

The brake mechanism 19 brakes the spool 10 without regard to the direction in which the spool 10 rotates. The brake mechanism 19 includes a magnetic brake mechanism 65 that brakes the spool 10 with magnetic force, and a casting control mechanism 66 that grasps and brakes both ends of the spool shaft 11.

The magnetic brake mechanism 65 includes a pair of magnet attachment portions 69 that are pivotably mounted on the brake case 28, and a brake operation portion 70 that pivots the magnet attachment portions 69. A plurality of magnets 69a is mounted on the magnet attachment portions 69. The magnet attachment portions 69 are pivotably mounted to the brake case 28 so that the magnets 69a come in contact with and are drawn away from the flange portions 10b of the spool 10. The brake operation portion 70 includes an operation dial 70a that is rotatively supported by the third side plate 27a, and a rotating cam mechanism 70b that pivots the magnet attachment portions 69 in association with the rotation of the operation dial 70a. An operation pin (not shown in the figures) is formed on the operation dial 70a such that the operation pin projects outward via the opening 36a from a position that is offset from the rotational center. The operation dial 70a can be operated from the exterior of the reel by the operation pin. The magnets 69a can be brought into contact with and moved away from the flange portions 10b of the spool 10 by operation of the operation dial 70a, and the braking force can be adjusted by strengthening or weakening the magnetic force applied to the spool 10.

The casting control mechanism 66 includes an operation knob71, friction disks 72, and a friction disk 73. The operation knob71 is screwed onto the first boss 34a of the fourth side plate 27b. The friction disks 72 are accommodated in the operation knob71, and the friction disk 73 is accommodated in the brake case 28. The friction disks 72, 73 can be brought into contact with both ends of the spool shaft 11 when the spool 10 is mounted to the reel unit. In this state, the braking power that is applied to the spool 10 can be adjusted by rotating the operation knob 71.

As shown in Figure 2, if decorative design is not taken into consideration, the basic unit 1 having a star drag 55 and a handle assembly 21 mounted on the tip of the handle shaft 22 can have almost all of the functions of the dual bearing reel constructed as noted above when all of the mechanisms (except a portion of the drag mechanism 15) are combined together inside the reel body 8. However, the third and fourth side plates 27a, 27b are not visually attractive because they were designed with only a view to being in proper positions and supporting the internal mechanisms, without taking into consideration their decorative appearances. Accordingly, the first and second cover members 36, 37 and the front cover member 38 are mounted on the basic unit 1. Note that because the star drag 55 and the handle assembly 21 will obviously be in the way, the star drag 55 and the handle assembly 21 must be mounted after the second cover member 37 is mounted. As shown in Figure 1, this will provide a dual bearing reel having a smart and elegant decorative design. Moreover, if the decorative design of the cover portion 3 changes, it will also be possible to manufacture dual bearing reels having a variety of different designs.

Here, instead of a conventional cover member that is mounted to the exterior of the main frame 26 having the first and second side plates 26a, 26b, it becomes possible to support and position the spool 10 and spool driving mechanism 13 that perform the basic operations of the dual bearing reel by mounting the third and fourth side plates 27a, 27b to the reel body 8. Because of this, the first and second cover members 36, 37 do not need to perform functions such as supporting the spool 10 and positioning the spool driving mechanism 13, there will be no additional limitations on the design as in the case of conventional dual bearing reels. Thus, it will become possible to freely design these components as decorative design components. Thus, the important functions of the dual bearing reel can be retained by the basic unit 1, while the decorative appearance of the dual bearing reel can be freely and easily designed with the cover portion 3. In addition, a plurality of different types of decorative designs is made possible by changing the decorative design of the cover portion 3, and the establishment of shared components is made possible by using the basic unit 1.

### <Other Embodiments>

(a) In the aforementioned embodiment, an example was described in which the reel unit of the dual bearing reel is not round. However, the present invention can also be applied to a dual bearing reel that is round-shaped.
(b) In the aforementioned embodiment, a dual bearing reel was illustrated that uses a star drag to adjust the drag force in the handle shaft. However, the present invention can be applied in a lever type dual bearing reel, in which a brake lever is mounted on the spool shaft.

According to the present invention described above, by attaching third and fourth side plates, instead of conventional cover members which are mounted to the exterior of a main frame, to an installation frame that has first and second side plates, it becomes possible to support and position a spool and spool driving mechanism that perform the basic operations of a dual bearing reel on. Because of this, the first and second cover members do not need to perform functions such as supporting the spool and positioning the spool driving mechanism. Accordingly, there will be no additional limitations on the design as in the case of the prior art. Thus, it will become possible to freely design these components as decorative design components. Therefore, the important functions of the dual bearing reel can be retained by the basic unit, while the decorative appearances of the dual bearing reel can be freely and easily performed by the cover members. In addition, a plurality of different types of decorative designs is possible by changing the decorative design of the cover members. Furthermore, it is possible to establish shared components by using the basic unit.

As used herein, the following directional terms "forward, rearward, above, downward, vertical, horizontal, below and transverse" as well as any other similar directional terms refer to those directions of a device equipped with the present invention. Accordingly, these terms, as utilized to describe the present invention should be interpreted relative to a device equipped with the present invention.

The terms of degree such as "substantially," "about" and "approximately" as used herein mean a reasonable amount of deviation of the modified term such that the end result is not significantly changed. These terms should be construed as including a deviation of at least ± 5% of the modified term if this deviation would not negate the meaning of the word it modifies.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing description of the embodiments according to the present invention are provided for illustration only, and not for the purpose of limiting the invention as defined by the appended claims.

## Claims

1. A dual bearing reel which is mounted on a fishing rod and winds fishing line around an axis that is perpendicular to the fishing rod, the dual bearing reel comprising:
a basic unit (1) having
a spool (10) for taking up fishing line,
a spool driving mechanism (13) for driving said spool, and
an installation frame that includes a main frame (26) which is adapted to be mounted to the fishing rod and has first and second side plates (26a, 26b) that are spaced apart from each other with said spool being mounted therebetween and a plurality of connectors that links said first and second side plates together, and
third and fourth side plates (27a, 27b) that are each detachably mounted to outer sides of said first and second side plates, said spool and said spool driving mechanism being mounted on said installation frame such that said spool and said spool driving mechanism function in cooperation with each other; **characterised in that**
decorative cover portion (3) having first cover member detachably screwed to said first side plate (26a), second cover member detachably screwed to second side plate (26b), such that said first and second cover members cover exteriors of said third and fourth side plates (27a, 27b), wherein said fourth side plate (27a) has stepped planar surface.

2. The dual bearing reel disclosed in claim 1, wherein
said spool driving mechanism (13) includes:
a rotation transmission mechanism (23) that includes a handle shaft (22) on which a handle (21) is mountable on one end thereof, such that rotation of said handle is transmitted to said spool (10),
a clutch mechanism (24) arranged operatively between said handle and said spool, said clutch mechanism being configured to switch said spool (10) between a freely rotatable state and a line winding state, and
a clutch switching mechanism (25) configured to switch said clutch mechanism (24) between a clutch-off state in which said spool is in said freely rotatable state, and a clutch-on state in which said spool is in said line winding state.

3. The dual bearing reel disclosed in claim 1 or 2, wherein
said basic unit (1) further includes:
a drag mechanism (15) that brakes rotation of said spool (10) when said spool rotates to reel out the fishing line, and
a level winding mechanism (17) for winding fishing line in an orderly manner on said spool; and
said drag mechanism (15) and said level winding mechanism (17) are installed on said installation frame such that said drag mechanism and said level winding mechanism function in cooperation with each other.

4. The dual bearing reel disclosed in any one of claims I to 3, wherein
said basic unit (1) further includes a brake mechanism (19) that brakes said spool (10) regardless of a direction in which the spool rotates; and
said brake mechanism is mounted between said first side plate (26a) and said third side plate (27a) of said basic unit.

5. The dual bearing reel disclosed in any one of claims 1 to 4, wherein
said second side plate (26b) and said fourth side plate (27b) are disposed with a space which accommodates said spool driving mechanism (13) being formed therebetween.

6. The dual bearing reel disclosed in any one of claims 1 to 5, wherein
said cover portion (3) further includes a front cover (38) that covers a side of the reel opposite a side to which the fishing rod is mounted.

## Patentansprüche

1. Duallagerrolle, die montiert ist an eine Angelrute und eine Angelschnur um eine Achse wickelt, die senkrecht zu der Angelrute ist, wobei die Duallagerrolle folgendes umfasst:
eine Basiseinheit (1), aufweisend
eine Spule (10) zum Angelschnuraufnehmen,
einen Spulenantriebsmechanismus (13) zum Antreiben der Spule und
einen Installationsrahmen, der einen Hauptrahmen (26) umfasst, angepasst, um an die Angelrute montiert zu werden und aufweisend erste und zweite Seitenplatten (26a, 26b), die voneinander beabstandet sind, wobei die Spule dort dazwischen montiert ist, und eine Vielzahl von Verbindern, die die ersten und zweiten Seitenplatten zusammenkoppeln, und
dritte und vierte Seitenplatten (27a, 27b), die jeweils abnehmbar montiert sind an Außenseiten der ersten und zweiten Seitenplatten, wobei die Spule und der Spulenantriebsmechanismus so montiert sind an dem Installationsrahmen, dass die Spule und
der Spulenantriebsmechanismus in Kooperation miteinander funktionieren; **gekennzeichnet durch**
einen dekorativen Abdeckabschnitt (3), aufweisend ein erstes Abdeckteil, abnehmbar geschraubt an die erste Seitenplatte (26a), ein zweites Abdeckteil, abnehmbar geschraubt an die zweite Seitenplatte (26b), so dass die ersten und zweiten Abdeckteile Außenseiten der dritten und vierten Seitenplatten (27a, 27b) bedecken, wobei die vierte Seitenplatte (27a) eine gestufte planare Fläche aufweist.

2. Duallagerrolle gemäß Anspruch 1, wobei der Spulenantriebsmechanismus (13) folgendes umfasst:
einen Drehtransmissionsmechanismus (23), umfassend einen Griffschaft (22), an dem ein Griff (21) an ein Ende davon montierbar ist, so dass eine Drehung des Griffs zu der Spule (10) übertragen wird,
einen Kupplungsmechanismus (24), wirkangeordnet zwischen dem Griff und der Spule, wobei der Kupplungsmechanismus konfiguriert ist, die Spule (10) zwischen einem frei drehbaren Zustand und einem Schnurwickelzustand zu schalten, und
einen Kupplungsschaltmechanismus (25), konfiguriert, um den Kupplungsmechanismus (24) zwischen einem ausgekuppelten Zustand, bei dem die Spule in dem frei drehbaren Zustand ist, und einem eingekuppelten Zustand, bei dem die Spule in dem Schnurwickelzustand ist, zu schalten.

3. Duallagerrolle gemäß Anspruch 1 oder 2, wobei die Basiseinheit (1) ferner folgendes umfasst:
einen Bremsmechanismus (15), der eine Drehung der Spule (10) bremst, wenn die Spule sich dreht, um die Angelschnur abzurollen, und
einen Levelwickelmechanismus (17) zum Wickeln der Angelschnur auf eine geordnete Art und Weise an der Spule, und
wobei der Bremsmechanismus (15) und der Levelwickelmechanismus (17) so installiert sind an dem Installationsrahmen, dass der Bremsmechanismus und der Levelwickelmechanismus in Kooperation miteinander funktionieren.

4. Duallagerrolle gemäß einem der Ansprüche 1 bis 3, wobei die Basiseinheit (1) ferner einen Bremsungsmechanismus (19) umfasst, der die Spule (10) bremst, ungeachtet davon, in welcher Richtung sich die Spule dreht; und
der Bremsungsmechanismus zwischen der ersten Seitenplatte (26a) und der dritten Seitenplatte (27a) der Basiseinheit montiert ist.

5. Duallagerrolle gemäß einem der Ansprüche 1 bis 4, wobei die zweite Seitenplatte (26b) und die vierte Seitenplatte (27b) mit einem Raum angeordnet sind, der den Spulenantriebsmechanismus (13) aufnimmt, der dort dazwischen ausgebildet ist.

6. Duallagerrolle gemäß einem der Ansprüche 1 bis 5, wobei der Abdeckabschnitt (3) ferner eine Vorderabdeckung (38) umfasst, die eine Seite der Rolle abdeckt, die einer Seite gegenüberstehend, an der die Angelrute montiert wird.

## Revendications

1. Moulinet à double palier qui est monté sur une canne à pêche et qui enroule une ligne de pêche autour d'un axe perpendiculaire à la canne à pêche, le moulinet à double palier comprenant :
une unité de base (1) ayant
un tambour (10) pour tendre la ligne de pêche,
un mécanisme d'actionnement de tambour (13) pour actionner le tambour, et
un cadre d'installation qui comprend un cadre principal (26) adapté pour être monté à la canne à pêche et ayant des première et deuxième plaques latérales (26a, 26b), qui sont séparées l'une de l'autre avec le tambour qui est monté entre les deux, et une pluralité de connecteurs qui relient ensemble les première et deuxième plaques latérales, et
des troisième et quatrième plaques latérales (27a, 27b) qui sont chacune montées amovibles sur des côtés externes des première et deuxième plaques latérales, le tambour et le mécanisme d'actionnement de tambour étant montés sur le cadre d'installation, de sorte que le tambour et le mécanisme d'actionnement de tambour fonctionnent en coopération l'un avec l'autre, **caractérisé en ce que**
une partie de couverture de décoration (3) ayant une premier élément de couverture vissé, amovible, à la première plaque latérale (26a), un deuxième élément de couverture vissé, amovible, à la deuxième plaque latérale (26b), de sorte que les premier et
deuxième éléments de couverture couvrent les extérieurs des troisième et quatrième plaques latérale (27a, 27b), la quatrième plaque latérale (27a) ayant une surface planaire à segments.

2. Moulinet à double palier selon la revendication 1, dans lequel le mécanisme d'actionnement de tambour (13) comprend :
un mécanisme de transmission de rotation (23) qui comprend un arbre de poignée (22) sur lequel une poignée (21) peut être montée à une extrémité, de sorte que la rotation de la poignée est transmise au tambour (10),
un mécanisme d'embrayage (24) agencé fonctionnellement entre la poignée et le tambour, le mécanisme d'embrayage étant configuré pour commuter le tambour (10) entre un état librement rotatif et un état d'enroulement de ligne, et
un mécanisme de commutation d'embrayage (25) configuré pour commuter le mécanisme d'embrayage (24) entre un état sans embrayage dans lequel le tambour est dans l'état librement rotatif, et un état avec embrayage dans lequel le tambour est dans l'état d'enroulement de ligne.

3. Moulinet à double palier selon la revendication 1 ou 2, dans lequel l'unité de base (1) comprend en outre :
un mécanisme de frein (15) qui freine la rotation du tambour (10) lorsque le tambour tourne pour désenrouler la ligne de pêche, et
un mécanisme d'enroulement de niveau (17) pour enrouler la ligne de pêche de manière ordonnée sur le tambour, et
le mécanisme de frein (15) et le mécanisme d'enroulement de niveau (17) sont installés sur le cadre d'installation de sorte que le mécanisme de frein et le mécanisme d'enroulement de niveau fonctionnent conjointement l'un avec l'autre.

4. Moulinet à double palier selon l'une des revendications 1 à 3, dans lequel l'unité de base (1) comprend en outre un mécanisme de freinage (19) qui freine le tambour (10), quelle que soit la direction dans laquelle le tambour tourne, et
le mécanisme de freinage étant monté entre la première plaque latérale (26a) et la troisième plaque latérale (27a) de l'unité de base.

5. Moulinet à double palier selon l'une quelconque des revendications 1 à 4, dans lequel la deuxième plaque latérale (26b) et la quatrième plaque latérale (27b) sont disposées avec un espace qui loge le mécanisme d'actionnement de tambour (13) formé entre les plaques.

6. Moulinet à double palier selon l'une quelconque des revendications 1 à 5, dans lequel la partie de couverture (3) comprend, en outre, une couverture frontale (38) qui couvre un côté du moulinet opposé à un côté auquel la canne à pêche est montée.
